# EUROPÄISCHE PATENTSCHRIFT

(11) **EP 3 668 745 B1**
(45) Veröffentlichungstag und Bekanntmachung des Hinweises auf die Patenterteilung: **22.03.2023**
(21) Anmeldenummer: 18793598.6
(22) Anmeldetag: 15.10.2018
(51) Int. Cl.: B60L 9/30, B60L 9/28, B60L 50/53, H02M 3/155, H02M 5/44, B60L 53/22

(54) **ENERGIESPEICHERANORDNUNG UND VERFAHREN ZUM BETREIBEN EINER SOLCHEN ENERGIESPEICHERANORDNUNG**
ENERGY STORAGE ARRANGEMENT AND METHOD FOR OPERATING SUCH ENERGY STORAGE ARRANGEMENT
SYSTÈME D'ACCUMULATION D'ÉNERGIE ET PROCÉDÉ D'OPÉRATION D'UN TEL SYSTÈME D'ACCUMULATION D'ÉNERGIE

(30) Priorität: 16.10.2017 DE 102017218455
(43) Veröffentlichungstag der Anmeldung: 24.06.2020
(73) Patentinhaber: Siemens Mobility GmbH, 81739 München (DE)
(72) Erfinder: FISCHPERER, Rolf, 91338 Igensdorf (DE); HASSLER, Stefan, 91281 Kirchenthumbach (DE); WIRTH, Heiko, 96231 Bad Staffelstein (DE)
(74) Vertreter: Siemens Patent Attorneys
(86) Internationale Anmeldenummer: PCT/EP2018/078071
(87) Internationale Veröffentlichungsnummer: WO 2019/076810

(56) Entgegenhaltungen:
- EP-A2- 2 639 097
- DE-A1-102010 044 322
- DE-A1-102012 205 095
- US-A- 5 291 388
- US-A1- 2013 106 187
- US-A1- 2016 211 749

## Beschreibung

Die Erfindung betrifft ein Verfahren zum Betreiben einer Energiespeicheranordnung mit einem Energiespeicher, einem Steller und einem Zwischenkreis einer Energieversorgung, wobei der Energiespeicher über den Steller an den Zwischenkreis anschließbar ist, wobei der Steller eine Stützkapazität und eine oder mehrere, parallel zur Stützkapazität geschaltete, steuerbare Steller-Pfade aufweist, und wobei an jedem Steller-Pfad jeweils ein Abgriff einer Steller-Phase eingerichtet ist.

Ein elektrisch antreibbares Fahrzeug, wie z.B. ein Zug, eine Straßenbahn oder ein Bus, ist permanent oder zeitweise mit einer Energieversorgung, wie einem Energieversorgungsnetz, verbunden. Das Fahrzeug kann ferner über einen mobilen Energiespeicher verfügen, der aus dem Energieversorgungsnetz aufladbar ist und der elektrische Energie zwischenspeichert. Diese gespeicherte Energie kann wiederum zum Antreiben des Fahrzeugs (Traktion) verwendet werden kann. In diesem Falle bildet der Energiespeicher eine sogenannte Traktionsbatterie.

Oftmals besteht die Anforderung, dass ein derartiges Fahrzeug als sogenanntes Mehrsystemfahrzeug, d.h. für Betrieb an unterschiedlichen Energieversorgungen ausgelegt wird. Hier kommen zum Beispiel wahlweise ein 25 kV AC Netz und ein 750 V DC Netz in Betracht. Für den Betrieb im 25 kV AC Netz kann vorgesehen sein, den Energiespeicher über einen DC-/DC-Steller zu betreiben. Dieser wird an den fahrzeuginternen Zwischenkreis angeschlossen, welcher von einer Gleichrichter-Einrichtung (z.B. Vierquadrantensteller, 4QS) gespeist wird.

Im Falle des Betriebs im 750 V DC Netz ist das Laden des Energiespeichers nicht ohne zusätzlichen Aufwand möglich. Das 750 V DC Netz weist grundsätzlich eine große Spannungsvariation auf. Ein direktes Anbinden des Energiespeichers an den Zwischenkreis ist somit quasi unmöglich. Bei diesem Betrieb muss somit ein Steller eingesetzt werden, um die DC-Spannungsebene des Fahrzeugs (750 V DC Netz) auf das Spannungsniveau des Energiespeichers zu stellen.

Aus Gründen des Energieinhaltes und der Strombelastung ist es auch vorteilhaft, wenn die Spannung am Energiespeicher über der üblichen Netzspannung liegt. Damit lässt sich jedoch ein kombinierter Betrieb am 25 kV AC Netz und am 750 V DC Netz nicht ohne weiteres lösen.

Der Einsatz eines Stellers, insbesondere für den Betrieb am 750 V DC Netz, hat zudem den Nachteil, dass die Spannung am Energiespeicher bei Tiefstellen unterhalb der kleinsten Netzspannung bzw. Spannung am Zwischenkreis sein muss und bei Hochstellen oberhalb der größten Netzspannung bzw. Spannung am Zwischenkreis sein muss, damit eine Anbindung des Energiespeichers zuverlässig ermöglicht ist. Es gibt auch Lösungen mit mehreren Hoch- bzw. Tiefsetzstellern, die die Spannung am Energiespeicher je nach Anforderung hoch bzw. tiefstellen. Allerdings erfordern diese Lösungen einen vergleichsweise hohen Hardwareaufwand, sind kostenintensiv bzw. benötigen großen Bauraum. US 5 291 388 A offenbart ein Verfahren zum Betreiben einer Energiespeicheranordnung mit einem Energiespeicher, einem Steller und einem Zwischenkreis einer Energieversorgung, wobei der Energiespeicher über den Steller an den Zwischenkreis angeschlossen ist,der Steller eine Stützkapazität und mehrere, parallel zur Stützkapazität geschaltete, steuerbare Steller-Pfade aufweist, wobei an jedem Steller-Pfad jeweils ein Abgriff einer Steller-Phase eingerichtet ist,der Energiespeicher mit einer ersten Steller-Phase verschaltet ist und der Zwischenkreis mit einer zweiten Steller-Phase verschaltet ist, wobei die Energiespeicheranordnung weiterhin einen Laderegler für den Energiespeicher und einen Spannungsregler für die Stützkapazität aufweist. EP 2 639 097 A2 offenbart ein Verfahren zum Betreiben einer Energiespeicheranordnung mit einem Energiespeicher, einem Steller und einem Zwischenkreis einer Energieversorgung, wobei der Energiespeicher über den Steller an den Zwischenkreis angeschlossen ist,der Steller eine Stützkapazität und ein parallel zur Stützkapazität geschaltetes, steuerbares Steller-Pfad aufweist.

Die Aufgabe der Erfindung besteht darin, eine Energiespeicheranordnung flexibel in Netzen beliebiger bzw. variabler Spannungen bei möglichst geringem zusätzlichem Hardwareaufwand zu betreiben.

Diese Aufgabe wird in einem ersten Aspekt durch ein Verfahren gemäß Patentanspruch 1 gelöst. Weiterbildungen sind in den zugehörigen Unteransprüchen offenbart.

Die Energiespeicheranordnung hat einen Energiespeicher, einen Steller und einem Zwischenkreis einer Energieversorgung. Der Energiespeicher ist über den Steller an den Zwischenkreis anschließbar, wobei der Steller eine Stützkapazität und eine oder mehrere, parallel zur Stützkapazität geschaltete, steuerbare Steller-Pfade aufweist. An jedem Steller-Pfad ist jeweils ein Abgriff einer Steller-Phase eingerichtet. Der Energiespeicher ist mit wenigstens einer ersten Steller-Phase verschaltet. Der Zwischenkreis ist mit einer zweiten Steller-Phase verschaltet, die sich von der ersten Steller-Phase unterscheidet.

Bei einer solchen Energiespeicheranordnung erfolgt ein Anschluss des Zwischenkreises an eine Steller-Phase anstatt einer Eingangsseite des Stellers, d.h. anstelle einer Schaltung parallel zur Stützkapazität (z.B. Stützkondensator) des Stellers. Auf diese Weise kann die Spannung an der Stützkapazität des Stellers von einer Spannung am Zwischenkreis entkoppelt werden. Das bedeutet, dass die Spannung an der Stützkapazität nicht mehr zwangsläufig der Spannung am Zwischenkreis entspricht, sondern andere Werte annehmen kann. Die Stützkapazität des Stellers kann z.B. vermittels der zweiten Steller-Phase, an der der Zwischenkreis angebunden ist, auf eine Spannung hochgestellt werden, die oberhalb der Spannung am Zwischenkreis liegt. Die Spannung der Stützkapazität des Stellers kann vorteilhaft auch oberhalb einer Spannung am Energiespeicher liegen. So kann der Energiespeicher auf eine vergleichsweise hohe Spannung geladen werden, die oberhalb der niedrigsten Spannung am Zwischenkreis liegt und dennoch auf einfache Weise verhindert werden, dass sich der Energiespeicher ungewollt in den Zwischenkreis entladen kann.

Die hier beschriebene Energiespeicheranordnung ermöglicht zudem eine Regelung der Spannung an der Stützkapazität des Stellers je nach Erfordernis des Energiespeichers unabhängig vom Verhalten des Zwischenkreises. Somit ist die Energiespeicheranordnung unabhängig und entkoppelt von einer Spannungsvariation des Zwischenkreises betreibbar. Ferner ist die Spannung am Energiespeicher flexibel einstellbar. Die Spannung am Energiespeicher kann insbesondere in einem Wertebereich oberhalb der kleinsten Spannung am Zwischenkreis und unterhalb der höchsten Spannung am Zwischenkreis flexibel eingestellt werden. Dies ermöglicht das Einrichten eines Energiespeichers mit hoher Spannung bzw. Ladung (hohem Energieinhalt) und gleichzeitig kleiner Strombelastung.

Auf diese Weise ermöglicht die Energiespeicheranordnung eine flexible Anpassung/Regelung der Spannung an der Stützkapazität des Stellers je nach Erfordernis der einzustellenden Spannung am Energiespeicher zum Laden/Entladen des Energiespeichers, wobei lediglich ein Steller mit zumindest zwei Steller-Phasen erforderlich ist. Somit ist der Hardware-Aufwand dieser Lösung minimal. Dennoch kann die Energiespeicheranordnung flexibel in Netzen beliebiger bzw. variabler Spannungen betrieben werden. Eine Anwendungsmöglichkeit ist z.B. der Einsatz in einem Mehrsystemfahrzeug, das für den Betrieb an unterschiedlichen Energieversorgungen, z.B. an einem 25 kV AC Netz mit >750 V Zwischenkreisspannung und an einem 750 V DC Netz, ausgelegt ist.

In diversen Ausführungsformen der Energiespeicheranordnung ist dem Energiespeicher und der ersten Steller-Phase eine erste Steller-Drossel zwischengeschaltet, wobei dem Zwischenkreis und der zweiten Steller-Phase eine zweite Steller-Drossel zwischengeschaltet ist. Die Steller-Drosseln dienen zur Realisierung einer Hoch-/Tiefsetzsteller-Funktion an den jeweiligen Steller-Phasen des Stellers. Die zweite Steller-Drossel kann z.B. über eine Drossel eines ohnehin erforderlichen Netzfilters realisiert werden, die zwischen dem Zwischenkreis und dem Steller eingerichtet ist. Auf diese Weise muss keine separate Steller-Drossel vorgesehen werden, was den Hardware-Aufwand weiter verringert.

In diversen Ausführungsformen der Energiespeicheranordnung ist der über die erste Steller-Phase mit dem Energiespeicher gekoppelte Steller-Pfad als Tiefsetzsteller-Einheit zwischen dem Steller und dem Energiespeicher steuerbar. Somit kann eine vergleichsweise höhere Spannung an der Stützkapazität des Stellers auf eine niedrigere Spannung am Energiespeicher tiefgestellt werden (z.B. zum Laden des Energiespeichers). Der über die erste Steller-Phase mit dem Energiespeicher gekoppelte Steller-Pfad kann auch in entgegengesetzter Energieflussrichtung als Hochsetzsteller-Einheit zwischen dem Energiespeicher und dem Steller gesteuert werden (z.B. zum Entladen des Energiespeichers bei einer niedrigeren Spannung am Energiespeicher im Vergleich zu einer höheren Spannung an der Stützkapazität des Stellers).

In diversen Ausführungsformen der Energiespeicheranordnung ist der über die zweite Steller-Phase mit dem Zwischenkreis gekoppelte Steller-Pfad als Hochsetzsteller-Einheit zwischen dem Zwischenkreis und dem Steller steuerbar (z.B. während eines Lade-Vorgangs des Energiespeichers). Somit kann die Stützkapazität des Stellers auf eine vergleichsweise höhere Spannung hochgestellt werden, die oberhalb der Spannung am Zwischenkreis liegt. Der über die zweite Steller-Phase mit dem Zwischenkreis gekoppelte Steller-Pfad kann auch in entgegengesetzter Energieflussrichtung als Tiefsetzsteller-Einheit zwischen dem Steller und dem Zwischenkreis gesteuert werden (z.B. während eines Entlade-Vorgangs des Energiespeichers).

Durch eine kombinierte Implementierung des über die erste Steller-Phase mit dem Energiespeicher gekoppelten Steller-Pfads als Tiefsetzsteller-Einheit in Richtung Energiespeicher und des über die zweite Steller-Phase mit dem Zwischenkreis gekoppelten Steller-Pfads als Hochsetzsteller-Einheit in Richtung Stützkapazität kann eine Spannung an der Stützkapazität eingestellt werden, die je nach Anforderung (Laden/Entladen des Energiespeichers) gleich oder höher ist als eine Spannung am Zwischenkreis bzw. die gleich oder höher ist als eine Spannung am Energiespeicher. Somit kann die Spannung am Energiespeicher höher eingestellt werden als eine niedrigste Spannung am Zwischenkreis und niedriger eingestellt werden als eine höchste Spannung am Zwischenkreis. In diesem Wertebereich kann die Spannung am Energiespeicher je nach Ansteuern der Steller-Phasen flexibel eingestellt werden.

In diversen Ausführungsformen der Energiespeicheranordnung ist der Steller durch eine Gleichrichter-Einheit zum Gleichrichten einer Wechselspannung in eine Gleichspannung am Zwischenkreis realisiert. Ein separater Steller ist dann nicht erforderlich. Die Gleichrichter-Einheit ist z.B. ein Vierquadrantensteller (4QS) am Eingang des Zwischenkreises. Auf diese Weise können Schaltelemente (z.B. Leistungstransistoren) und Gleichrichter-Elemente (z.B. Dioden), die als Paare (Parallelschaltung) in diversen Schaltpfaden innerhalb der Gleichrichter-Einheit eingerichtet sind, auf einfache Weise als Steller-Einheiten des Stellers verwendet werden. Dies kann erfolgen, wenn die Gleichrichter-Einheit gerade nicht zum Gleichrichten einer Wechselspannung in eine Gleichspannung am Zwischenkreis eingesetzt wird. Insbesondere bei Einsatz eines 4QS entspricht die Topologie der Verschaltung der Schaltelemente und Gleichrichter-Elemente der Topologie der einzelnen Steller-Pfade, sodass der 4QS sehr einfach als Steller der hier erläuterten Art und Funktion eingesetzt werden kann. Der 4QS wird beim Betrieb am 750 V DC Netz nicht benutzt. Somit kann der 4QS, ggf. unter Nutzung einer speziellen Software, für den Betrieb mit 750 V DC als Steller der hier erläuterten Art genutzt werden. Es kann z.B. eine Umschaltung einer Steuersoftware des 4QS für wahlweise den 4QS-Betrieb während eines Betriebes am 25 kV AC Netz und den Steller-Betrieb am 750 V DC Netz erfolgen. Auf diese Weise kann der Hardware-Aufwand für die Implementierung der hier erläuterten Energiespeicheranordnung drastisch reduziert werden, wenn der 4QS als Steller eingesetzt wird. Ein separater Steller ist dann nicht erforderlich.

In den Ausführungsformen, in denen die Gleichrichter-Einheit als Steller der hier erläuterten Art eingesetzt wird, kann der Hardware-Aufwand weiter reduziert werden, wenn der Gleichrichter-Einheit ein Transformator vorgeschaltet ist zum Transformieren einer primärseitigen Wechselspannung in eine sekundärseitige Wechselspannung. In diesem Fall kann eine Sekundärwicklung des Transformators als Steller-Drossel eingesetzt werden. Insbesondere bei Einsatz eines 4QS ist die Ausnutzung der Sekundärwicklung des Transformators als Steller-Drossel einfach realisierbar. Die Sekundärwicklung des Transformators ist mit ihren Anschlüssen am Brückenzweig des 4QS verschaltet, so dass sich verschiedene Schaltpfade am 4QS einstellen lassen, um in Zusammenspiel mit der Sekundärwicklung des Transformators eine Hochsetzsteller-Funktionalität bzw. eine Tiefsetzsteller-Funktionalität zu realisieren.

Im Verfahren gemäss der Erfindung weist die Energiespeicheranordnung einen Laderegler auf, der für eine Regelung eines Stromistwerts des Energiespeichers auf einen Stromsollwert des Energiespeichers implementiert ist. Durch den Laderegler ist ein Spannungssollwert, insbesondere ein Spannungssollwert an der Stützkapazität des Stellers, vorgebbar. Durch den Laderegler kann der Steller zum Laden/Entladen des Energiespeichers geregelt werden.

Der Steller verursacht bekanntermaßen durch die Schaltperioden der gesteuerten Schaltmittel einen periodisch an- und absteigenden Strom. D.h. der Lade-/Entladestrom des Energiespeichers enthält neben dem gewünschten DC-Anteil einen ungewünschten AC-Anteil, der den Energiespeicher belastet. Es ist weiterhin bekannt, dass der AC-Anteil vom Aussteuergrad des Stellers abhängt, d.h. von der Spannungsdifferenz zwischen dem Energiespeicher und dem Zwischenkreis. Durch eine geschickte Wahl und Regelung der Spannungen vermittels des hier erläuterten Regelungskonzepts kann die Belastung des Stellers bzw. des Energiespeichers durch AC-Anteile des Lade-/Entladestroms minimiert werden.

In einer Implementierung des Regelungskonzepts kann z.B. der über die erste Steller-Phase mit dem Energiespeicher gekoppelte Steller-Pfad (d.h. steuerbare Schaltmittel im Steller-Pfad) vermittels des Ladereglers gesteuert werden, um einen gewünschten Lade- oder Entladestrom am Energiespeicher einzustellen. Um den AC-Anteil im Lade-/Entladestrom zu minimieren, wird dabei die Spannung an der Stützkapazität des Stellers vermittels des über die zweite Steller-Phase mit dem Zwischenkreis gekoppelten Steller-Pfads abweichend von den üblichen Nominalwerten auf eine Spannung eingestellt, welche nur geringfügig (z.B. 20%, vorzugsweise 10%, vorzugsweise 5%, vorzugsweise 2%) über der Spannung am Energiespeicher liegt. Die Regelung des Lade-/Entladestroms an der ersten Steller-Phase führt dann dazu, dass sehr hohe Aussteuergrade (z.B. größer 95 %) eingestellt werden müssen, was den AC-Stromanteil deutlich reduziert bzw. minimiert.

In einer alternativen Implementierung des Regelungskonzepts, quasi als Sonderfall (Grenzfall), wird das Regelprinzip invertiert. Das bedeutet, dass die Aussteuerung des über die erste Steller-Phase mit dem Energiespeicher gekoppelten Steller-Pfads fest auf 100% eingestellt wird. Damit fließt kein AC-Anteil mehr im Lade-/Entladestrom in bzw. aus dem Energiespeicher. Welligkeiten eines Stroms durch Schalten von Schaltmitteln innerhalb des über die zweite Steller-Phase mit dem Zwischenkreis gekoppelten Steller-Pfads werden vermittels der Stützkapazität vom Energiespeicher entkoppelt bzw. geglättet. Letzterer kann somit sehr schonend betrieben werden. Damit sich bei dieser Regelung dennoch der gewünschte Lade-/Entladestrom einstellt, wird hier ein neuartiges Regelungskonzept für die zweite Steller-Phase beschrieben, die mit dem Zwischenkreis verbunden ist.

Der Laderegler (z.B. ein üblicher PI-Regler) misst die Abweichung zwischen Soll- und Iststrom am Energiespeicher und stellt demgemäß die Spannung an der Stützkapazität des Stellers durch Ansteuern von Schaltmitteln im Steller-Pfad der zweiten Steller-Phase (die mit dem Zwischenkreis gekoppelt ist) nach. Höhere Spannungen führen zu (größeren) Ladeströmen, kleinere Spannungen zu (größeren) Entladeströmen, jeweils ohne AC-Anteil des Lade-/Entladestroms. Optional erhält die Regelung die Batteriespannung als Vorsteuergröße.

Der Laderegler sollte sein Spannungssollwert-Signal so übersetzen, dass derjenige Steller-Pfad, an dem der Zwischenkreis angeschlossen ist, entsprechend ausgesteuert wird. Hierzu weist die Energiespeicheranordnung einen zusätzlichen Spannungsregler auf, der für eine Regelung eines Spannungsistwerts an der Stützkapazität auf den vom Laderegler vorgegebenen Spannungssollwert an der Stützkapazität implementiert ist.

Durch den Spannungsregler wird Stromsollwert an der zweiten Steller-Phase vorgegeben Weiter weist die Energiespeicheranordnung einen Stromregler auf, der für eine Regelung eines Stromistwerts an der zweiten Steller-Phase auf den vom Spannungsregler vorgegebenen Stromsollwert an der zweiten Steller-Phase implementiert ist. Durch den Stromregler kann ein Steuersignal zum Steuern des über die zweite Steller-Phase mit dem Zwischenkreis gekoppelten Steller-Pfads vorgegeben werden.

In dieser Implementierung des Regelungskonzepts kann statt der Regelung des Steller-Pfades des Energiespeichers eine Vollaussteuerung des Steller-Pfades des Energiespeichers erfolgen. Eine Regelung des Lade-/Entladestroms erfolgt dabei nicht durch Regelung des Steller-Pfades des Energiespeichers, sondern über die Regelung der Spannung an der Stützkapazität vermittels des Steller-Pfades des Zwischenkreises. Durch Einstellen der Spannung an der Stützkapazität kann ein bestimmter Lade-/Entladestrom eingestellt werden.

Durch die hier erläuterten Implementierungen eines Regelungskonzepts kann eine ungewünschte AC-Strombelastung des Energiespeichers minimal gehalten werden (wenn die Spannung am Stützkondensator etwas über die Spannung am Energiespeicher geregelt wird) bzw. ganz auf null abgesenkt werden (wenn die Spannung am Stützkondensator direkt auf die Spannung am Energiespeicher angeglichen wird).

Die obige Aufgabe wird durch ein Verfahren gemäß Patentanspruch 1 zum Betreiben einer Energiespeicheranordnung der oben erläuterten Art gelöst. Implementierungen sind in den zugehörigen Unteransprüchen offenbart. Bei diesem Verfahren ist der Energiespeicher über den Steller an den Zwischenkreis der Energieversorgung angeschlossen. Der über die zweite Steller-Phase mit dem Zwischenkreis gekoppelte Steller-Pfad wird als Hochsetzsteller gesteuert, so dass an der Stützkapazität eine Spannung abfällt, die gleich oder größer als eine Spannung am Zwischenkreis ist. Der über die zweite Steller-Phase mit dem Zwischenkreis gekoppelte Steller-Pfad kann dabei derart gesteuert werden, dass an der Stützkapazität eine Spannung abfällt, die gleich oder größer als eine Spannung am Energiespeicher ist.

In diversen Implementierungen des Verfahrens wird der über die erste Steller-Phase mit dem Energiespeicher gekoppelte Steller-Pfad vollausgesteuert (Aussteuerung 100%).

Auch durch ein derartiges Verfahren werden die oben im Zusammenhang mit der Energiespeicheranordnung erläuterten Vorteile erzielt.

Die Erfindung wird anhand mehrerer Zeichnungen nachfolgend näher erläutert.

Es zeigen:
- Figur 1: eine Ausführungsform einer Energiespeicheranordnung nach dem Stand der Technik, die an unterschiedliche Energieversorgungen angeschlossen ist,
- Figur 2: eine Ausführungsform einer erfindungsgemäßen Energiespeicheranordnung, die an unterschiedliche Energieversorgungen angeschlossen ist,
- Figur 3: einen ersten Teil eines Regelungskonzept zur Regelung der Energiespeicheranordnung gemäß Figur 2,
- Figur 4: einen zweiten Teil eines Regelungskonzept zur Regelung der Energiespeicheranordnung gemäß Figur 2,
- Figur 5: einen dritten Teil eines Regelungskonzept zur Regelung der Energiespeicheranordnung gemäß Figur 2 und
- Figur 6: einen vierten Teil eines Regelungskonzept zur Regelung der Energiespeicheranordnung gemäß Figur 2.

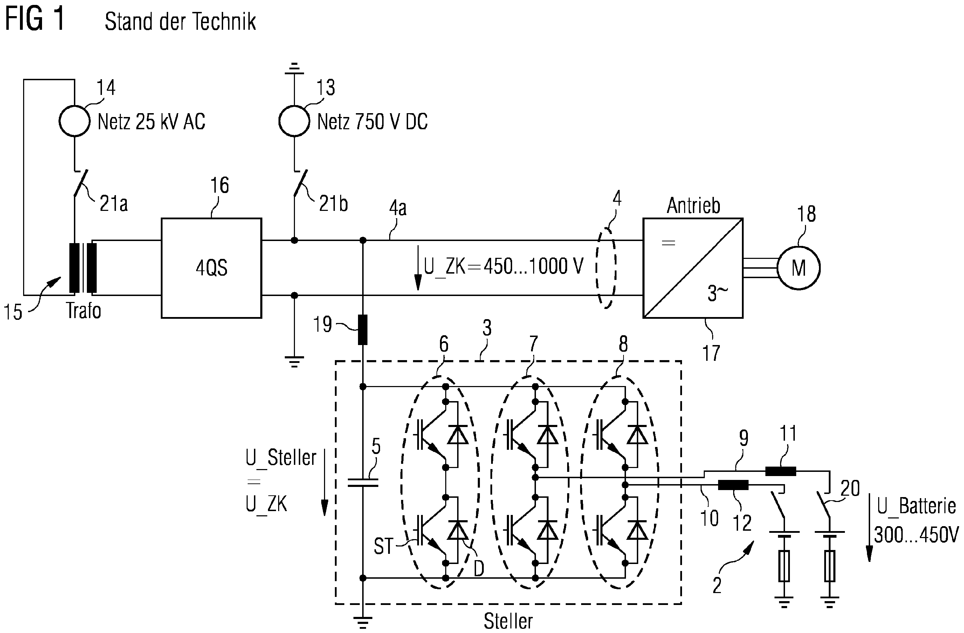

Figur 1 zeigt eine Ausführungsform einer Energiespeicheranordnung 1 nach dem Stand der Technik, die an unterschiedliche Energieversorgungen 13, 14 angeschlossen ist. Die Energiespeicheranordnung 1 weist einen Energiespeicher 2, einen Steller 3, und einen Zwischenkreis 4 auf. Der Zwischenkreis 4 kann sowohl aus einem DC-Netz 13 als auch aus einem AC-Netz 14 versorgt werden. Das DC-Netz 13 ist in dem Ausführungsbeispiel gemäß Figur 1 ein 750 V DC Netz. Das AC-Netz 14 ist im Ausführungsbeispiel gemäß Figur 1 ein 25 kV AC Netz. Die Wechselspannung aus dem AC-Netz 14 kann über einen Transformator 15 transformiert und über eine Gleichrichter-Einheit 16 an einer Eingangsseite des Zwischenkreises 4 in eine Gleichspannung U_ZK am Zwischenkreis 4 gewandelt werden. Im Ausführungsbeispiel gemäß Figur 1 ist die Gleichrichter-Einheit 16 ein Vierquadrantensteller (4QS). Im Falle einer Versorgung des Zwischenkreises 4 über das DC-Netz 13 kann Letzteres direkt mit dem Zwischenkreis 4 gekoppelt werden. Die beiden Netze 13 und 14 sind über Schutzschalter 21a, 21b entsprechend zu- oder abschaltbar. An einer Ausgangsseite des Zwischenkreises 4 ist eine Wechselrichter-Einheit 17 zum Wechselrichten der Spannung U_ZK am Zwischenkreis 4 in eine Wechselspannung (hier Dreiphasen-Wechselspannung) eingerichtet. Über die Wechselspannung kann ein Motor 18 versorgt werden.

Der Steller 3 ist über eine Netzfilter-Drossel 19 mit dem Zwischenkreis 4 gekoppelt, genauer mit einer Anschlussleitung 4a des Zwischenkreises 4. Der Steller 3 umfasst eine Stützkapazität 5 an einer Eingangsseite des Stellers 3, wobei die Stützkapazität 5 in Serie zur Netzfilter-Drossel 19 geschaltet ist. Des Weiteren umfasst der Steller 3 insgesamt drei Steller-Pfade 6, 7 und 8. Die Steller-Pfade umfassen jeweils eine Serienschaltung zweier Paare, jeweils umfassend einen Schalter ST und eine Diode D. Das heißt, jeder Steller-Pfad hat ein oberes Paar und ein unteres Paar eines Schalters ST und einer Diode D. Ein jeder Schalter ST kann beispielsweise ein Leistungs-Halbleiter-Schalter sein. An den beiden Steller-Pfaden 7 und 8 zweigen jeweils eine Steller-Phase 9 und 10 ab. Über die Steller-Phasen 9 und 10 ist der Energiespeicher 2 an den Steller 3 angeschlossen. In die Steller-Phasen 9 und 10 sind jeweils eine Steller-Drossel 11 bzw. 12 geschaltet. Über Schutzschalter 20 ist der Energiespeicher 2 von den Steller-Phasen 9 bzw. 10 trennbar bzw. an diese anschließbar.

Durch die Verschaltung des Stellers 3 in der Energiespeicheranordnung 1 gemäß Figur 1 stellt sich an der Stützkapazität 5 eine Spannung U_Steller ein, die (im Wesentlichen) gleich der Spannung U_ZK am Zwischenkreis 4 ist. Die beiden Steller-Phasen 9 und 10 fungieren vermittels der Steller-Drosseln 11 und 12 als Tiefsetzsteller zwischen dem Steller 3 und dem Energiespeicher 2. Auf diese Weise wird die Spannung U_ZK am Zwischenkreis 4 (gepuffert über die Stützkapazität 5) in eine niedrigere Spannung U_Batterie am Energiespeicher 2 gestellt. Gemäß dem Ausführungsbeispiel in Figur 1 umfasst die Spannung U_ZK am Zwischenkreis 4 Werte in einem Bereich von 450 V bis 1000 V, während die gestellte Spannung U_Batterie am Energiespeicher 2 Werte in einem Bereich von 300 V bis 450 V aufweist.

Die Anordnung gemäß Figur 1 findet beispielsweise Anwendung in einem elektrisch antreibbaren Fahrzeug, wie zum Beispiel einem Zug, einer Straßenbahn oder einem Bus. Das Fahrzeug ist dabei als Mehrsystemfahrzeug eingerichtet, das heißt für einen Betrieb an den verschiedenen Energieversorgungen 13 und 14. Der Energiespeicher 2 kann hierbei eine Traktionsbatterie darstellen. Diese dient zum Antrieb des Motors 18, falls das Fahrzeug ohne direkte Netzanbindung an eines der Netze 13 und 14 betrieben werden soll.

Der Steller 3 dient zum Laden bzw. Entladen des Energiespeichers 2 aus dem bzw. in den Zwischenkreis 4. Die Anordnung gemäß Figur 1 hat den Nachteil, dass der Energiespeicher 2 lediglich Spannungswerte annehmen kann, die entweder unterhalb der niedrigsten Spannung U_ZK am Zwischenkreis 4 liegt (wie in Figur 1 dargestellt) oder oberhalb der höchsten Spannung U_ZK am Zwischenkreis 4 liegt. Auf diese Weise ist die Anordnung gemäß Figur 1 unflexibel bei einem Betrieb in Netzen variabler Spannung, wie sie durch die Netze 13 bzw. 14 dargestellt sind. Insbesondere das Netz 13 unterliegt starken Spannungsvariationen.

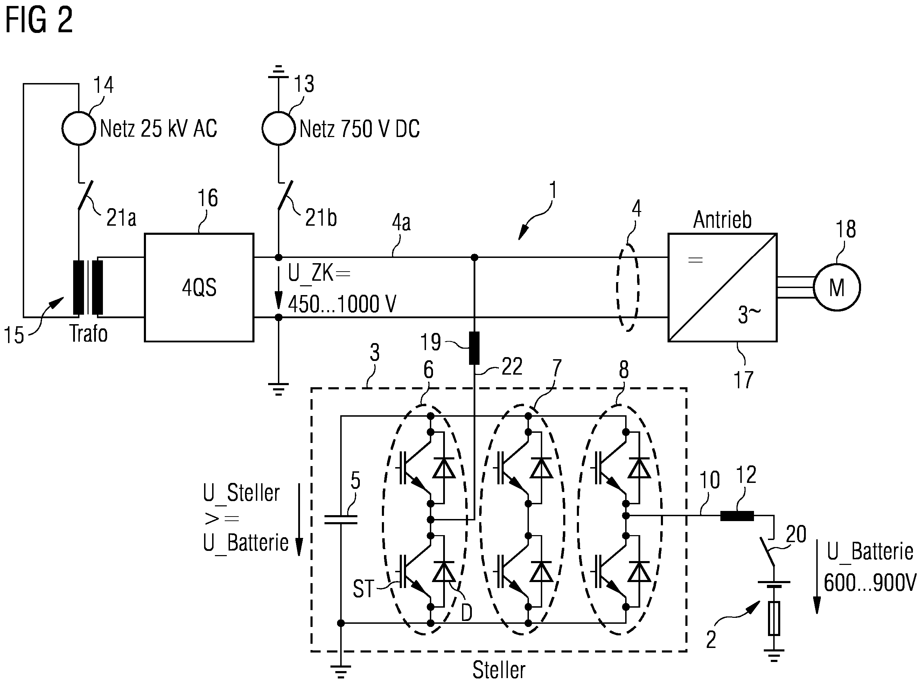

Figur 2 zeigt eine Ausführungsform einer erfindungsgemäßen Energiespeicheranordnung 1, die gegenüber der Anordnung aus Figur 1 diverse Vorteile aufweist. Sämtliche Komponenten aus Figur 2 entsprechen Komponenten aus Figur 1, soweit sie nicht anderweitig ausgeführt oder implementiert sind. An dieser Stelle bedarf es keiner redundanten Erläuterung der Komponenten.

Im Unterschied zur Konfiguration gemäß Figur 1 ist der Zwischenkreis 4 gemäß Figur 2, genauer gesagt die Anschlussleitung 4a des Zwischenkreises 4 auf andere Weise an den Steller 3 angeschlossen als in Figur 1. In Figur 2 ist die Anschlussleitung 4a über die Netzfilter-Drossel 19 direkt mit der Steller-Phase 22 des Steller-Pfades 6 verbunden (anstelle einer Serienschaltung mit der Stützkapazität 5 gemäß Figur 1). Gemäß Figur 2 bedeutet dies, dass zwischen einem Anschluss des Zwischenkreises 4 und der Stützkapazität 5 neben der Netzfilter-Drossel 19 noch ein Paar, umfassend einen Schalter ST und eine Diode D, des Steller-Pfades 6 verschaltet ist. Die Netzfilter-Drossel 19 arbeitet in dieser Konfiguration als Steller-Drossel der Steller-Phase 22. Auf diese Weise kann die Steller-Phase 22 als Hochsetzsteller arbeiten, so dass die Spannung U_ZK am Zwischenkreis 4 auf eine Spannung U_Steller an der Stützkapazität 5 hochgestellt wird, die gleich oder größer als die Spannung U_ZK am Zwischenkreis 4 ist. Umgekehrt kann die Steller-Phase 22 als Tiefsetzsteller arbeiten, so dass die Spannung U_Steller an der Stützkapazität 5 auf die Spannung U_ZK am Zwischenkreis 4 tiefgestellt werden kann.

Gleichzeitig ist der Energiespeicher 2 über die Steller-Phase 10 des Steller-Pfades 8 und über die Steller-Drossel 12 an den Steller 3 angeschlossen. Auf diese Weise arbeitet die Steller-Phase 10 als Tiefsetzsteller zwischen dem Steller 3 und dem Energiespeicher 2 bzw. als Hochsetzsteller in umgekehrter Richtung zwischen dem Energiespeicher 2 und dem Steller 3. Durch die Konfiguration gemäß Figur 2 ist somit an der Stützkapazität 5 eine Spannung U_Steller einstellbar, die gleich oder größer als eine Spannung U_Batterie am Energiespeicher 2 ist.

Durch die Beschaltung des Zwischenkreises 4 am Steller 3, genauer gesagt an der Steller-Phase 22, kann die Spannung U_Steller an der Stützkapazität 5 des Stellers 3 auf einen anderen Wert gestellt werden als die Spannung U_ZK des Zwischenkreises 4. Die Spannung U_Steller ist damit variabel gleich oder höher als die Spannung U_ZK einstellbar. Durch Hochstellen der Spannung U_ZK am Zwischenkreis 4 auf die Spannung U_Steller an der Stützkapazität 5 wird dadurch eine Regelung der Spannung U_Batterie des Energiespeichers 2 unabhängig von der Spannung U_ZK am Zwischenkreis 4 ermöglicht. Auf diese Weise ist die Spannung U_Batterie am Energiespeicher 2 flexibel in einem Wertebereich einstellbar, der größer ist als die niedrigste Spannung U_ZK am Zwischenkreis 4 und der kleiner ist als die höchste Spannung U_ZK am Zwischenkreis 4. In der Ausführungsform gemäß Figur 2 beträgt die Spannung U_ZK am Zwischenkreis 4 beispielsweise 450 V bis 1000 V, während die Spannung U_Batterie am Energiespeicher 2 600 V bis 900 V beträgt. Die Spannung U_Batterie ist damit sehr flexibel und variabel, vor allen Dingen unabhängig von der Spannung U_ZK am Zwischenkreis 4, einstellbar. Die Energiespeicheranordnung 1 kann dabei sehr vorteilhaft in verschiedenen Netzen 13 und 14 betrieben werden, trotz zum Teil starker Spannungsvariationen in diesen Netzen. Insbesondere kann die Spannung U_Batterie am Energiespeicher 2 auf einen Wert über der üblichen Netzspannung des Netzes 13 festgesetzt werden, was aus Gründen des Energieinhaltes und der Strombelastung des Energiespeichers 2 vorteilhaft ist. Weiterhin realisiert die Anordnung gemäß Figur 2 eine sehr flexible Einstellung der Spannung am Energiespeicher 2 mit sehr geringem Hardwareaufwand.

Durch Steuern der jeweiligen Schaltelemente ST und Dioden D der jeweiligen beteiligten Steller-Pfade 6 und 8 können die Steller-Phasen 22 und 10 entsprechend als Hochsetzsteller bzw. Tiefsetzsteller betrieben werden (entsprechend vorstehenden Erläuterungen), um die Spannungen U_Steller bzw. U_Batterie einzustellen und zu regeln. Durch Einstellen der Spannung U_Steller an der Stützkapazität 5 größer als die Spannung U_Batterie am Energiespeicher 2 kann z.B. verhindert werden, dass sich der Energiespeicher 2 ungewollt in den Zwischenkreis 4 entlädt. Dennoch kann die Spannung am Energiespeicher 2 höher gewählt werden als der niedrigste Wert der Spannung U_ZK am Zwischenkreis 4.

Zum Regeln eines Lade-/Entladestromes am Energiespeicher 2 kann gemäß einem Regelungskonzept die Spannung U_Steller an der Stützkapazität 5 etwas oberhalb der Spannung U_Batterie am Energiespeicher 2 eingestellt werden, beispielsweise 20%, 10%, 5% oder 2% oberhalb der Spannung U_Batterie). Diese Einstellung erfolgt durch Steuern des Steller-Pfades 6 zum Stellen der Spannungen U_Steller und U_ZK. Anschließend erfolgt eine Regelung des Lade-/Entladestromes am Energiespeicher 2 durch Steuern des Steller-Pfades 8, mit dem der Energiespeicher 2 über die Steller-Drossel 12 verbunden ist (kontrolliertes/geregeltes Hochsetzen der Spannung U_Batterie auf die Spannung U_Steller). Dadurch, dass die Spannung U_Steller an der Stützkapazität 5 nur leicht oberhalb der Spannung U_Batterie gestellt ist (vergleichsweise geringe Spannungsdifferenz), muss ein sehr hoher Aussteuergrad (z.B. größer 95 %) eingestellt werden, was den AC-Stromanteil des Lade-/Entladestromes am Energiespeicher 2 deutlich reduziert bzw. minimiert. Auf diese Weise wird eine Belastung des Energiespeichers 2 durch Stromschwankungen (Welligkeiten) reduziert und der Energiespeicher 2 geschont.

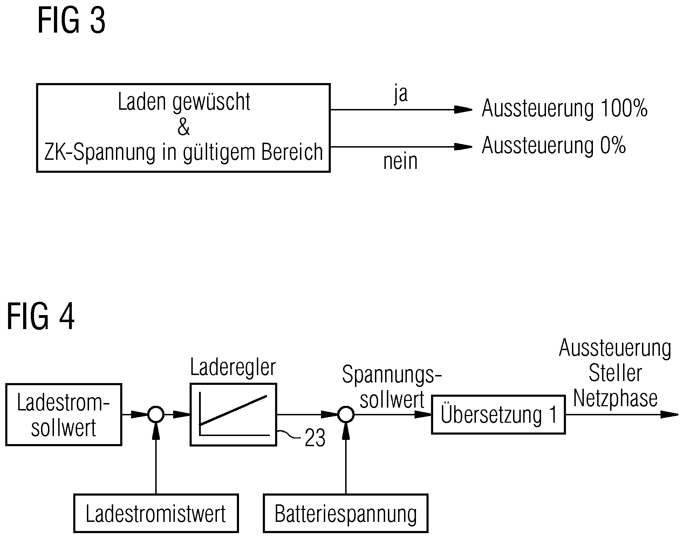

Unter Heranziehen der Figuren 3 bis 6 wird nachfolgend ein weiteres Regelungskonzept zur Regelung der Anordnung gemäß Figur 2 erläutert.

Gemäß Figur 3 erfolgt zunächst eine Abfrage, ob ein Laden des Energiespeichers 2 gewünscht ist und die Spannung U_ZK des Zwischenkreises 4 in dem gültigen Bereich liegt. Ist dies nicht der Fall, wird die Steller-Phase 10 zu 0 % ausgesteuert, das heißt es erfolgt kein Laden bzw. Entladen des Energiespeichers 2, weil keine Stellung der Spannung erfolgt. Sind jedoch die Anforderungen gemäß Figur 3 gegeben, so wird die Steller-Phase 10 zu 100 % ausgesteuert (Vollausteuerung). Das bedeutet, dass die Spannung U_Batterie des Energiespeichers 2 auf die Spannung U_Steller an der Stützkapazität 5 eingestellt bzw. angeglichen wird. Durch Regelung der Spannung U_Steller an der Stützkapazität 5 vermittels einer Regelung des Steller-Pfades 6 (Steuern der Schalter ST des Steller-Pfades 6 als Hochsetzsteller bzw. Tiefsetzsteller) kann ein gewünschter Strom zum Laden bzw. Entladen des Energiespeichers 2 geregelt werden. Die Steller-Phase 10 bleibt dabei zu 100 % vollausgesteuert.

Hierzu regelt ein Laderegler 23 gemäß Figur 4 einen Ladestromistwert (bzw. Entladestromistwert) auf einen Ladestromsollwert (bzw. Entladestromsollwert) und gibt dabei einen Spannungssollwert unter Berücksichtigung der Batteriespannung U_Batterie am Energiespeicher 2 vor. Die Batteriespannung U_Batterie wird dabei als Offset beaufschlagt. Der Spannungssollwert, der über den Laderegler 23 vorgegeben wird, wird nachfolgend über eine Übersetzung 1 in einen weiteren Regelungsparameter übersetzt.

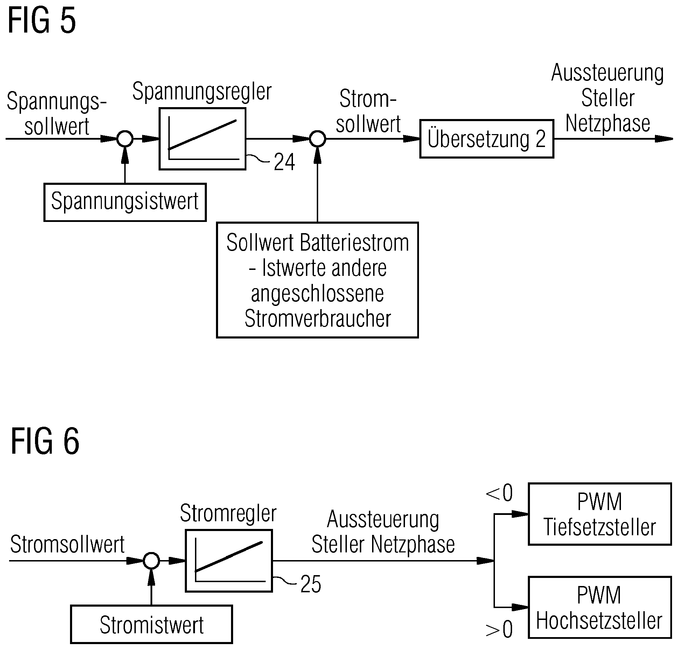

Hierzu regelt ein Spannungsregler 24 gemäß Figur 5 einen Spannungsistwert an der Stützkapazität 5 auf den durch den Laderegler 23 vorgegebenen Spannungssollwert und gibt dabei einen Stromsollwert unter Berücksichtigung eines Sollwerts des Batteriestroms (ggf. unter Abzug der Istwerte anderer angeschlossener Stromverbraucher) vor. Der Stromsollwert entspricht dabei den Sollwert eines Stroms an der Steller-Phase 22, die an den Zwischenkreis 4 angeschlossen ist. Der Stromsollwert wird im Weiteren über eine Übersetzung 2 in einen weiteren Regelungsparameter übersetzt.

Hierzu wird gemäß Figur 6 ein Stromistwert an der Steller-Phase 22 auf den durch den Spannungsregler 24 vorgegebenen Stromsollwert vermittels eines Stromreglers 25 geregelt. Der Stromregler 25 gibt dabei ein Steuersignal zur Steuerung der Steller-Phase 22 vor. Im Falle eines Ladebetriebes (Fall >0 in Figur 6) wird der Steller-Pfad 6 (vergleiche Figur 2) als Hochsetzsteller zwischen dem Zwischenkreis 4 und der Stützkapazität 5 betrieben. Dabei wird der unten liegende Schalter ST im Steller-Pfad 6 über ein pulsweitenmoduliertes Steuersignal (PWM) angesteuert. Durch Einstellen einer bestimmten Spannung U_Steller an der Stützkapazität 5 wird dabei ein mehr oder weniger hoher Ladestrom aus dem Zwischenkreis 4 in Richtung des Energiespeichers 2 vorgegeben. Eine hohe Spannung U_Steller ergibt einen hohen Ladestrom in Richtung Energiespeicher 2.

Im Falle eines Entladebetriebes (Fall <0 in Figur 6) wird der Steller-Pfad 6 (vergleiche Figur 2) als Tiefsetzsteller zwischen der Stützkapazität 5 und dem Zwischenkreis 4 betrieben. Hierbei wird der oben liegende Schalter ST im Steller-Pfad 6 über ein pulsweitenmoduliertes Steuersignal (PWM) angesteuert. Durch Einstellen einer bestimmten Spannung U_Steller an der Stützkapazität 5 bzw. einer bestimmten Spannung U_ZK am Zwischenkreis 4 wird dabei ein mehr oder weniger hoher Entladestrom aus dem Energiespeicher 2 in Richtung Zwischenkreis 4 vorgegeben. Eine niedrige Spannung U_Steller bzw. U_ZK ergibt einen hohen Entladestrom aus dem Energiespeicher 2.

Auf diese Weise kann ein Strom am Energiespeicher 2 durch Ansteuerung des Steller-Pfades 6 geregelt werden, wobei die Steller-Phase 10 voll ausgesteuert bleibt. Somit werden AC-Anteile des Stroms am Energiespeicher 2 minimiert bzw. vollständig unterdrückt. Der Energiespeicher 2 kann somit sehr schonend betrieben werden.

Die dargestellten Ausführungsformen sind lediglich beispielhaft gewählt. Sämtliche Regler 23 bis 25 können beispielsweise PI-Regler sein. Andere Regler (P, PID, PT1, usw.) können je nach Anforderung an die Regelung eingesetzt oder hinzugezogen werden.

In nicht dargestellten Beispielen kann eine Energiespeicheranordnung 1 anstelle eines separaten Stellers 3 einen entsprechenden Steller über den Vierquadrantensteller (4QS) 16 realisieren. Hierbei kann die Sekundärwicklung des Transformators 15 als Steller-Drossel eingesetzt werden. Auf diese Weise kann ein separater Steller 3 gemäß Figur 2 eingespart werden, was den Hardwareaufwand der Anordnung reduziert. Ferner kann der Energiespeicher 2 in Figur 2 anstelle einer einzelnen Steller-Phase 10 auch an mehrere Steller-Phasen (vgl. Figur 1) angeschlossen sein. Dies kann je nach Leistungsvorgaben bzgl. des Energiespeichers 2 variieren.

## Patentansprüche

1. Verfahren zum Betreiben einer Energiespeicheranordnung (1) mit einem Energiespeicher (2), einem Steller (3) und einem Zwischenkreis (4) einer Energieversorgung (13, 14), wobei der Energiespeicher (2) über den Steller (3) an den Zwischenkreis (4) angeschlossen ist,
der Steller (3) eine Stützkapazität (5) und eine oder mehrere, parallel zur Stützkapazität (5) geschaltete, steuerbare Steller-Pfade (6, 7, 8) aufweist, wobei an jedem Steller-Pfad (6, 7, 8) jeweils ein Abgriff einer Steller-Phase (9, 10, 22) eingerichtet ist,
der Energiespeicher (2) mit wenigstens einer ersten Steller-Phase (10) verschaltet ist und der Zwischenkreis (4) mit einer zweiten Steller-Phase (22) verschaltet ist, die sich von der ersten Steller-Phase (10) unterscheidet,
wobei die Energiespeicheranordnung (1) einen Laderegler (23) aufweist, der einen Stromistwert des Energiespeichers (2) auf einen Stromsollwert des Energiespeichers (2) regelt, **dadurch gekennzeichnet, dass** durch den Laderegler (23) ein Spannungssollwert vorgegeben wird, die Energiespeicheranordnung (1) einen Spannungsregler (24) aufweist, der einen Spannungsistwert an der Stützkapazität (5) auf den vom Laderegler (23) vorgegebenen Spannungssollwert an der Stützkapazität (5) regelt, und
der Spannungssollwert von dem Laderegler (23) hinsichtlich einer geringen Spannungsdifferenz zwischen der Spannung (U_Steller) an der Stützkapazität (5) und der Spannung (U_Batterie) an dem Energiespeicher (2) vorgegeben wird.

2. Verfahren nach Anspruch 1, wobei dem Energiespeicher (2) und der ersten Steller-Phase (10) eine erste Steller-Drossel (12) zwischengeschaltet ist und dem Zwischenkreis (4) und der zweiten Steller-Phase (22) eine zweite Steller-Drossel (19) zwischengeschaltet ist.

3. Verfahren nach Anspruch 1 oder 2, wobei der über die erste Steller-Phase (10) mit dem Energiespeicher (2) gekoppelte Steller-Pfad (8) als Hoch- oder Tiefsetzsteller-Einheit zwischen dem Steller (3) und dem Energiespeicher (2) gesteuert wird und wobei der über die zweite Steller-Phase (22) mit dem Zwischenkreis (4) gekoppelte Steller-Pfad (6) als Tief- oder Hochsetzsteller-Einheit zwischen dem Zwischenkreis (4) und dem Steller (3) gesteuert wird.

4. Verfahren nach einem der Ansprüche 1 bis 3, wobei der Steller (3) durch eine aktiv gesteuerte Gleichrichter-Einheit (16) zum Gleichrichten einer Wechselspannung in eine Gleichspannung (U_ZK) am Zwischenkreis (4) realisiert ist.

5. Verfahren nach Anspruch 4, wobei der Gleichrichter-Einheit (16) ein Transformator (15) vorgeschaltet ist zum Transformieren einer primärseitigen Wechselspannung in eine sekundärseitige Wechselspannung, wobei eine Sekundärwicklung des Transformators (15) als Steller-Drossel fungiert.

6. Verfahren nach Anspruch 1, wobei
von dem Spannungsregler (24) ein Stromsollwert an der zweiten Steller-Phase (22) vorgegeben wird,
die Energiespeicheranordnung (1) einen Stromregler (25) aufweist, der einen Stromistwert an der zweiten Steller-Phase (22) auf den vom Spannungsregler (24) vorgegebenen Stromsollwert an der zweiten Steller-Phase (22) regelt, wobei durch den Stromregler (25) ein Steuersignal zum Steuern des über die zweite Steller-Phase (22) mit dem Zwischenkreis (4) gekoppelten Steller-Pfads (6) vorgegeben wird,
wobei die zweite Steller-Phase (22) insbesondere gesteuert wird, mittels der Spannung (U_Steller) an der Stützkapazität (5) den Strom zum Laden- bzw. Entladen des Energiespeichers (2) zu regeln, wobei die erste Steller-Phase (10) insbesondere vollausgesteuert wird.

7. Verfahren nach einem der Ansprüche 1 bis 6, wobei der über die zweite Steller-Phase (22) mit dem Zwischenkreis (4) gekoppelte Steller-Pfad (6) als Hochsetzsteller gesteuert wird, so dass an der Stützkapazität (5) eine Spannung (U_Steller) abfällt, die gleich oder größer als eine Spannung (U_ZK) am Zwischenkreis (4) ist.

8. Verfahren nach Anspruch 7, wobei der über die erste Steller-Phase (10) mit dem Energiespeicher (2) gekoppelte Steller-Pfad (8) vollausgesteuert wird.

## Claims

1. Method for operating an energy storage arrangement (1) having an energy storage unit (2), a converter (3) and an intermediate circuit (4) of an energy supply (13, 14), wherein the energy storage unit (2) is connected by way of the converter (3) to the intermediate circuit (4),
the converter (3) has a smoothing capacitor (5) and one or more controllable converter paths (6, 7, 8) which are connected in parallel with the smoothing capacitor (5), wherein a tap of a converter phase (9, 10, 22) is set up in each case on each converter path (6, 7, 8),
the energy storage unit (2) is interconnected with at least one first converter phase (10) and the intermediate circuit (4) is interconnected with a second converter phase (22) which differs from the first converter phase (10),
wherein
the energy storage arrangement (1) has a charge controller (23) which controls an actual current value of the energy storage unit (2) to a target current value of the energy storage unit (2), **characterised in that** a target voltage value is predetermined by the charge controller (23), the energy storage arrangement (1) has a voltage regulator (24) which regulates an actual voltage value at the smoothing capacitor (5) to the target voltage value, predetermined by the charge controller (23), at the smoothing capacitor (5), and
the target voltage value is predetermined by the charge controller (23) in respect of a low voltage difference between the voltage (U_converter) at the smoothing capacitor (5) and the voltage (U_battery) at the energy storage unit (2).

2. Method according to claim 1, wherein a first converter choke (12) is interconnected between the energy storage unit (2) and the first converter phase (10) and a second converter choke (19) is interposed between the intermediate circuit (4) and the second converter phase (22).

3. Method according to claim 1 or 2, wherein the converter path (8) coupled to the energy storage unit (2) by way of the first converter phase (10) as a step-up or step-down converter unit is controlled between the converter (3) and the energy storage unit (2) and wherein the converter path (6) coupled with the intermediate circuit (4) by way of the second converter phase (22) as a step-down or step-up converter unit is controlled between the intermediate circuit (4) and the converter (3).

4. Method according to one of claims 1 to 3, wherein the converter (3) is realized by an actively controlled rectifier unit (16) for rectifying an alternating voltage into a direct voltage U_ZK) on the intermediate circuit (4).

5. Method according to claim 4, wherein a transformer (15) is arranged upstream of the rectifier unit (16) for transforming a primary-side alternating voltage into a secondary-side alternating voltage, wherein a secondary winding of the transformer (15) functions as a converter choke.

6. Method according to claim 1, wherein
a target current value is predetermined by the voltage regulator (24) on the second converter phase (22),
the energy storage arrangement (1) has a current controller (25) which regulates an actual current value on the second converter phase (22) to the target current value, predetermined by the voltage controller (24), on the second converter phase (22), wherein a control signal for controlling the converter path (6) coupled to the intermediate circuit (4) by way of the second converter phase (22) is predetermined by the current controller (25),
wherein the second converter phase (22) is in particular controlled in order to regulate the current for charging or discharging the energy storage unit (2) by means of the voltage (U_converter) at the smoothing capacitor (5), wherein the first converter phase (10) is in particular fully modulated.

7. Method according to one of claims 1 to 6, wherein the converter path (6) coupled to the intermediate circuit (4) by way of the second converter phase (22) is controlled as a step-up converter so that a voltage (U_converter) which equates to or is greater than a voltage (U_ZK) at the intermediate circuit (4) drops on the smoothing capacitor (5).

8. Method according to claim 7, wherein the converter path (8) coupled to the energy storage unit (2) by way of the first converter phase (10) is fully modulated.

## Revendications

1. Procédé pour faire fonctionner un montage (1) d'accumulation d'énergie comprenant un accumulateur (2) d'énergie, un régulateur (3) et un circuit (4) intermédiaire d'une alimentation (13, 14) en énergie, l'accumulateur (2) d'énergie étant raccordé au circuit (4) intermédiaire par le régulateur (3),
le régulateur (3) a une capacité (5) d'appui et un ou plusieurs chemins (6, 7, 8) de régulateur, qui peuvent être commandés et qui sont montés en parallèle avec la capacité (5) d'appui, une prise d'une phase (9, 10, 22) de régulateur étant prévue respectivement sur chaque chemin (6, 7, 8) du régulateur,
l'accumulateur (2) d'énergie est connecté à au moins une première phase (10) du régulateur et le circuit (4) intermédiaire est connecté à une deuxième phase (22) du régulateur, qui est différente de la première phase (10) du régulateur,
dans lequel
le montage (1) d'accumulation d'énergie a un régleur (23) de charge, qui règle une valeur réelle du courant de l'accumulateur (2) d'énergie à une valeur de consigne du courant de l'accumulateur (2) d'énergie, **caractérisé en ce que** l'on prescrit, par le régleur (23) de charge, une valeur de consigne de tension, le montage (1) d'accumulation d'énergie à un régleur (24) de tension, qui règle une valeur réelle de tension aux bornes de la capacité (5) d'appui à la valeur de consigne de tension aux bornes de la capacité (5) d'appui prescrite par le régleur (23) de charge, et
on prescrit la valeur de consigne de tension par le régleur (23) de charge, en ce qui concerne une petite différence de tension entre la tension (U_Steller) aux bornes de la capacité (5) d'appui et la tension (U_Batterie) aux bornes de l'accumulateur (2) d'énergie.

2. Procédé suivant la revendication 1, dans lequel, entre l'accumulateur (2) d'énergie et la première phase (10) du régulateur est montée une première bobine (12) de régulateur et entre le circuit (4) intermédiaire et la deuxième phase (22) du régulateur est montée une deuxième bobine (19) de régulateur.

3. Procédé suivant la revendication 1 ou 2, dans lequel, on commande le chemin (8) du régulateur relié à l'accumulateur (2) d'énergie par l'intermédiaire de la première phase (10) du régulateur, comme survolteur ou dévolteur entre le régulateur (3) et l'accumulateur (2) d'énergie, et dans lequel on commande la deuxième phase (22) du régulateur, ayant le chemin (6) du régulateur relié au circuit (4) intermédiaire, comme dévolteur ou survolteur entre le circuit (4) intermédiaire et le régulateur (3) .

4. Procédé suivant l'une des revendications 1 à 3, dans lequel le régulateur (3) est réalisé par une unité (16) de redresseur commandée activement pour le redressement d'une tension alternative en une tension (U_ZK) continue aux bornes du circuit (4) intermédiaire.

5. Procédé suivant la revendication 4, dans lequel, en amont de l'unité (16) à redresseur est monté un transformateur (15) de transformation d'une tension alternative du côté primaire en une tension alternative du côté secondaire, un enroulement secondaire du transformateur (15) servant de bobine de régulateur.

6. Procédé suivant la revendication 1, dans lequel
on prescrit, par le régleur (24) de tension, une valeur de consigne du courant à la deuxième phase (22) du régulateur,
le montage (1) d'accumulation d'énergie a un régleur (25) de courant, qui règle, sur la deuxième phase (22) du régulateur, à la valeur de consigne du courant prescrite par le régleur (24) de tension, dans lequel, par le régleur (25) de courant, on prescrit un signal de commande pour la commande du chemin (6) de régulateur relié au circuit (4) intermédiaire par la deuxième phase (22) du régulateur,
dans lequel on commande notamment la deuxième phase (22) du régulateur pour régler, au moyen de la tension (U_Steller) aux bornes de la capacité (5) d'appui, le courant de charge ou de décharge de l'accumulateur (2) d'énergie, dans lequel on règle notamment au régime maximum la première phase (10) du régulateur.

7. Procédé suivant l'une des revendications 1 à 6, dans lequel on commande, comme survolteur, le chemin (6) du régulateur relié au circuit (4) intermédiaire par l'intermédiaire de la deuxième phase (22) du régulateur, de manière à ce qu'aux bornes de la capacité (5) d'appui chute une tension (U_Steller), qui est supérieure ou égale à une tension (U_ZK) aux bornes du circuit (4) intermédiaire.

8. Procédé suivant la revendication 7, dans lequel on commande au régime maximum le chemin (8) du régulateur relié à l'accumulateur (2) d'énergie par la première phase (10) du régulateur.
